# EUROPÄISCHE PATENTSCHRIFT

(11) **EP 3 108 268 B1**
(45) Veröffentlichungstag und Bekanntmachung des Hinweises auf die Patenterteilung: **30.12.2020**
(21) Anmeldenummer: 15710410.0
(22) Anmeldetag: 11.02.2015
(51) Int. Cl.: G01T 1/26

(54) **VERFAHREN UND VORRICHTUNG ZUM ERFASSEN UND ZUM UNTERSCHEIDEN VON ELEMENTARTEILCHEN**
METHOD AND APPARATUS TO DETECT AND DISCRIMINATE ELEMENTARY PARTICLES
PROCÉDÉ ET DISPOSITIF POUR DÉTECTER ET DISCRIMINER PARTICULES ÉLÉMENTAIRES

(30) Priorität: 18.02.2014 AT 1162014
(43) Veröffentlichungstag der Anmeldung: 28.12.2016
(73) Patentinhaber: Griesmayer, Erich, 2700 Wr. Neustadt (AT)
(72) Erfinder: Griesmayer, Erich, 2700 Wr. Neustadt (AT)
(74) Vertreter: Miksovsky, Alexander
(86) Internationale Anmeldenummer: PCT/AT2015/000021
(87) Internationale Veröffentlichungsnummer: WO 2015/123706

(56) Entgegenhaltungen:
- WO-A1-99/64892
- WO-A2-2013/088352
- ANGELONE M ET AL: "Neutron Detectors Based Upon Artificial Single Crystal Diamond", IEEE TRANSACTIONS ON NUCLEAR SCIENCE, IEEE SERVICE CENTER, NEW YORK, NY, US, Bd. 56, Nr. 4, 1. August 2009 (2009-08-01) , Seiten 2275-2279, XP011272140, ISSN: 0018-9499, DOI: 10.1109/TNS.2009.2025177

## Beschreibung

Die vorliegende Erfindung bezieht sich auf Verfahren zum Erfassen und zum Unterscheiden von Elementarteilchen, wie beispielsweise Protonen, Ionen, Elektronen, Neutronen, Photonen oder dgl., in einem Diamantdetektor, wobei an den Detektor ein elektrisches Feld angelegt wird und wobei beim Durchtritt eines Teilchens durch den Detektor ein Ladungsimpuls in dem Detektor erzeugt wird und jeder Ladungsimpuls nachfolgend in ein elektrisches Signal umgewandelt wird, wobei der Detektor in wenigstens zwei voneinander getrennte Teilbereiche unterteilt wird, an weiche jeweils getrennt ein elektrisches Feld angelegt wird. Die vorliegende Erfindung bezieht sich darüber hinaus auf eine Vorrichtung zum Erfassen und zum Unterscheiden von Elementarteilchen, wie beispielsweise Protonen, Ionen, Elektronen, Neutronen, Photonen oder dgl., mit einem Diamantdetektor zum Erzeugen eines Ladungsimpulses in dem Detektor bei Durchtritt eines Teilchens durch diesen, wobei an den Detektor ein elektrisches Feld angelegt ist, wobei der Detektor in wenigstens zwei voneinander getrennte Teilbereiche unterteilt ist, an welche jeweils getrennt ein elektrisches Feld anlegbar ist.

Ein Verfahren sowie eine Vorrichtung der oben genannten Art sind beispielsweise der WO 99/64892 A1 zu entnehmen, wobei ein Detektor für ionisierende Strahlung zur Verfügung gestellt werden soll. Unterschiedliche Teilbereiche dieses Detektors sind mit einem gemeinsamen Kontakt verbunden, wobei Detektorelemente unterschiedlicher Dicke für die Detektion von unterschiedlichen Arten einer Strahlung ausgebildet sind, so dass der Detektor Ausgangssignale für unterschiedliche Arten von Strahlung, welche auf den Detektor einfallen, ausgeben bzw. zur Verfügung stellen soll.

Aus der WO 20131088352 A2 ist darüber hinaus ein Strahlungsdetektor bekannt geworden, wobei ein strahlungsempfindliches Halbleiterelement, welches Elektron-Loch-Paare in Antwort auf eine Bestrahlung erzeugt, neben entsprechenden Elektroden vorgesehen ist. Durch spezielle Anordnung der Vielzahl von Elektrodenelementen soll eine eindeutige Zuordnung von Ladungsteilen zu benachbarten Pixel- bzw. Bildpunktelementen ermöglicht werden.

Aus der Veröffentlichung Angelone M et al. "Neutron Detectors Based upon Artificial Single Crystal Diamond", IEEE Transactions on Nuclear Science, IEEE Service Center, New York, NY, US, Bd. 56, Nr. 4, 1. August 2009 (2009-08-01), Seiten 2275-2279, XP011272140, ISSN: 0018-9499. DOI: 10.1109/TNS. 2009.2025177 ist insbesondere die Verwendung von künstlich hergestellten Diamanten zur Herstellung von Neutronendetektoren bekannt geworden.

Zum Erfassen von Elementarteilchen, wie beispielsweise Protonen, Ionen, Elektronen, Neutronen, Photonen oder dgl. in einem Detektor erfolgt eine Detektion bzw. Erfassung üblicherweise dadurch, dass bei hohen Frequenzen bzw. Signalraten eine Integration einer Vielzahl von Signalen erfolgt, wobei nach einer Verstärkung bei einer derartigen Integration im Wesentlichen ein Stromsignal in Abhängigkeit von der Anzahl bzw. Vielzahl von erfassten Teilchen angezeigt bzw. aufgezeichnet wird. Welters kann eine Detektion einzelner Teilchen üblicherweise nur bei vergleichsweise geringen Frequenzen bzw. Signalraten unter Berücksichtigung der Möglichkeiten einer Auflösung einzelner Impulse bzw. Signale in derartigen Detektoren vorgenommen werden.

Für derartige Verfahren bzw. Vorrichtung zum Erfassen von Elementarteilchen ist beispielsweise die Verwendung von Diamantdetektoren bekannt, wie dies oben bereits angeführt wurde, wobei im Normalbetrieb eines derartigen Diamantdetektors ein elektrisches Potenzial an Elektroden des Detektors angelegt wird, wodurch im Inneren des Detektors ein elektrisches Feld entsteht. Zu erfassende Elementarteilchen, welche auf den Detektor auftreffen bzw. durch diesen hindurchtreten, ionisieren das Detektormaterial, wobei im elektrischen Feld eine Kraft auf derartige ionisierte Ladungsträger im Inneren des Detektormaterials wirkt. Diese ionisierten Ladungsträger bewegen sich in diesem elektrischen Feld zu einer der Elektroden. Diamant ist ein Halbleiter, so dass sowohl positiv geladene Löcher als auch negativ geladene Elektronen ionisiert werden, wobei sich die Elektronen und Löcher mit unterschiedlichen, jedoch vergleichbaren Geschwindigkeiten bewegen. Je nach Vorzeichen der elektrischen Ladung bewegen sich die Ladungsträger zur positiven oder zur negativen Elektrode, wobei derart erzeugte Ladungsimpulse in weiterer Folge in ein elektrisches signal umgewandelt und üblicherweise entsprechend verstärkt und zur Erfassung der Signalraten bzw. Zählraten entsprechend in einer Ausleseelektronik verarbeitet werden.

Derart eignen sich Diamantdetektoren zur Erfassung einer Vielzahl von unterschiedlichen Elementarteilchen, wobei darüber hinaus bekannt ist, dass niederenergetische Teilchen vom Detektor bei einer ausreichenden Dicke absorbiert werden, während hochenergetische Teilchen den Detektor durchdringen. Weiters ist davon auszugehen, dass die Interaktionswahrscheinlichkeit bei geladenen Teilchen in einem Diamantdetektor nahezu eins ist, während eine Interaktionswahrscheinlichkeit von elektrisch nicht geladenen Teilchen, wie beispielsweise Photonen, Neutronen, etc. kleiner bzw. wesentlich kleiner als eins ist. Weiters ist das Ausmaß einer Energieablagerung bei einem Durchtritt eines Teilchens durch den Detektor abhängig von der ursprünglichen bzw. Ausgangsenergie des Teilchens, wobei darüber hinaus die Wahrscheinlichkeit einer Ionisation im Inneren des Detektors auch abhängig von der Energie des Teilchens ist. Weiters kann monokristallines Material eines derartigen Diamantdetektors ein Ionisationsprofil im Detektor präzise abbilden. Weiters ist es unter Verwendung von Diamantdetektoren möglich, bei einem nicht durchtretenden Teilchen die derart gesamte im Detektor absorbierte Teilchenenergie zu ermitteln, während bei durchtretenden Teilchen aufgrund höherer Energie und/oder Nicht-Vorhandensein einer Ladung lediglich ein Teil der Teilchenenergie im Detektor absorbiert wird und feststellbar ist.

Auf Basis der obigen Ausführungen ist unmittelbar einsichtig, dass unter Berücksichtigung eines üblicherweise weiten Energiespektrums von zu erfassenden Elementarteilchen und/oder insbesondere unterschiedlichem Verhalten im Vergleich zwischen geladenen und nicht geladenen Teilchen mit einem Detektor üblicherweise lediglich eine Teilchenart oder Teilchen eng begrenzter Energie erfasst werden können, so dass für eine Erfassung bzw. Feststellung von unterschiedlichen Teilchen entsprechend eine Mehrzahl von Detektoren zur Verfügung gestellt werden muss. Die Bereitstellung derartiger mehrerer Detektoren erfordert neben einem entsprechend erhöhten Platzbedarf für die Anordnung einer derartigen Mehrzahl von Detektoren auch eine entsprechende Vervielfachung von Versorgungseinrichtungen, wie beispielsweise Hochspannungs-Leitungen sowie Auswerteeinrichtungen. Darüber hinaus ist bei einer räumlich eng benachbarten Anordnung einer Mehrzahl von Detektoren auch eine wechselweise Beeinflussung derselben nicht auszuschließen.

Die vorliegende Erfindung zielt daher darauf ab, ein Verfahren sowie eine Vorrichtung der eingangs genannten Art dahingehend weiterzubilden, dass die oben genannten Nachteile gemäß dem Stand der Technik vermieden bzw. zumindest weitgehend reduziert werden. Die vorliegende Erfindung zielt hierbei insbesondere darauf ab, ein Erfassen und Unterscheiden von Elementarteilchen unterschiedlicher Art und/oder unterschiedlicher Energie in einem gemeinsamen Detektor bei entsprechend vereinfachter Ausbildung sowie entsprechend verringertem Aufwand im Hinblick auf Versorgungs- und Auswerteeinrichtungen zu ermöglichen.

Zur Lösung dieser Aufgaben ist ein Verfahren der oben genannten Art im Wesentlichen dadurch gekennzeichnet, dass eine Auslesung jedes Ladungsimpulses über eine zwischen den Teilbereichen liegende gemeinsame Ausleseelektrode des Detektors durchgeführt wird und dass an die voneinander getrennten Teilbereiche des Detektors jeweils ein elektrisches Feld entgegengesetzter Polarität angelegt wird, wobei die Auslesung der Signale der getrennten Teilbereiche des Detektors über eine gemeinsame Ausleseleitung erfolgt. Da der Detektor in wenigstens zwei voneinander getrennte Teilbereiche unterteilt wird, gelingt es, insbesondere in Anpassung an zu erfassende und voneinander zu unterscheidende Elementarteilchen die Teilbereiche des Detektors gegebenenfalls entsprechend unterschiedlich auszubilden, wobei an jeden der Teilbereiche jeweils getrennt ein elektrisches Feld angelegt wird. Durch Vorsehen wenigstens zwei getrennter Teilbereiche in dem gemeinsamen Detektor wird somit unmittelbar der Aufwand für die Versorgung desselben, Insbesondere im Hinblick auf eine für einen Betrieb eines derartigen Detektors bereitzustellende Hochspannungsversorgung entsprechend vereinfacht. Eine weitere Vereinfachung bzw. Verringerung des Aufwands für die Auswertung der in dem Detektor entstehenden Ladungsimpulse beim Durchtritt bzw. Eintritt von zu erfassenden bzw. zu unterscheidenden Teilchen wird darüber hinaus erfindungsgemäß dadurch erzielt, dass eine Auslesung jedes Ladungsimpulses über eine zwischen den Teilbereichen liegende gemeinsame Ausleseelektrode des Detektors durchgeführt wird. Derart werden nicht nur die Auslesung und eine nachfolgende Auswertung vereinfacht, sondern es kann beispielsweise auch durch Verwendung einer derartigen gemeinsamen Ausleseelektrode eine Auswertung von Koinzidenzen, insbesondere zur Unterscheidung unterschiedlicher Teilchen herangezogen werden. Insbesondere zur Vereinfachung der Auswertung und/oder zur Unterscheidung zwischen unterschiedlichen Teilchen wird erfindungsgemäß darüber hinaus vorgeschlagen, dass an die voneinander getrennten Teilbereiche des Detektors jeweils ein elektrisches Feld entgegengesetzter Polarität angelegt wird, wobei die Auslesung der Signale der getrennten Teilbereiche des Detektors über eine gemeinsame Ausleseleitung erfolgt. Derartige Teilbereiche mit jeweils entgegengesetzter Polarität sowie die Auslesung der Signale über eine gemeinsame Ausleseleitung ermöglichen somit die Feststellung bzw. Erfassung von Teilchen von teilweise unterschiedlicher Energie und/oder unterschiedlichem Ladungszustand.

Für eine einfache Unterscheidung bzw. Separation zwischen unterschiedlichen Teilchen wird darüber hinaus vorgeschlagen, dass eine Unterscheidung bzw. Separation zwischen unterschiedlichen Teilchen und/oder Teilchen unterschiedlicher Energie durch einen Vergleich der gemessenen Amplituden von Ladungsimputsen oder eine Pulsformanalyse der Ladungsimpulse durchgeführt wird, wie dies einer weiters bevorzugten Ausführungsform des erfindungsgemäßen Verfahrens entspricht. Eine derartige Auswertung von gemessenen Amplituden von Ladungsimpulsen oder eine Pulsformanalyee lässt sich mit bekannten Auswerteeinrichtungen bereitstellen, so dass durch Bereitstellung eines gemeinsamen Detektors mit voneinander getrennten Teilbereichen und dem Vorsehen einer gemeinsamen Ausleseelektrode das erfindungsgemäße Verfahren entsprechend einfach und zuverlässig durchgeführt werden kann.

Im Zusammenhang mit der Auswertung unterschiedlicher Amplituden wird gemäß einer weiters bevorzugten Ausführungsform vorgeschlagen, dass zum Unterscheiden von Teilchen unterschiedlicher Amplitude eine Pulsform- oder Schwellwerttriggerung durchgeführt wird.

Demgegenüber wird im Zusammenhang mit der Durchführung einer Pulsformanalyse gemäß einer weiters bevorzugten Ausführungsform vorgeschlagen, dass bei einer Pulsformanalyse insbesondere zwischen im Wesentlichen rechteckigen Pulsformen, welche insbesondere von Teilchen erzeugt werden, welche den Detektor nicht durchdringen, und im Wesentlichen dreieckigen Pulsformen unterschieden wird, welche insbesondere von den Detektor durchdringenden Teilchen erzeugt werden. Es lässt sich somit aus charakteristischen Pulsformen unmittelbar insbesondere aus einem Vergleich der in unterschiedlichen Teilbereichen des Detektors festgestellten Signale eine Erfassung von unterschiedlichen Elementarteilchen bzw. eine Unterscheidung zwischen denselben beispielsweise auf Basis unterschiedlicher Energie durchführen.

Wie eingangs bereits erwähnt, ist insbesondere bei elektrisch nicht geladenen Teilchen eine Interaktionswahrscheinlichkeit in einem derartigen Detektor relativ gering, so dass gegebenenfalls selbst bei Durchführung einer Pulsformanalyse keine zuverlässigen bzw. gesicherten Daten betreffend zu erfassende Elementarteilchen erhältlich sind. In diesem Zusammenhang wird gemäß einer weiters bevorzugten Ausführungsform vorgeschlagen, dass für eine Erfassung von in dem Detektor nicht unmittelbar erfassbaren Elementarteilchen eine Konversion der Teilchen in einer mit einem Teilbereich des Detektors verbundenen bzw. diesem vorgeschalteten Konversionsschicht In in dem Detektor erfassbare Elementarteilchen durchgeführt wird. Derart erfolgt in einer Konversionsschicht eine Konversion bzw. Umwandlung derartiger Teilchen in in wenigstens einem Teilbereich des Detektors nach einer Umwandlung erfassbare bzw. detektierbare Teilchen, so dass aus dem Vorhandensein derartiger durch Umwandlung entstandener Teilchen Rückschlüsse auf ursprünglich in der Konversionsschicht umgewandelte bzw. durch sie absorbierte und derart im Detektor zu erfassende Teilchen möglich sind.

Zur Lösung der eingangs genannten Aufgaben ist darüber hinaus eine Vorrichtung der oben genannten im Wesentlichen dadurch gekennzeichnet, dass für eine Auslesung jedes Ladungsimpulses eine zwischen den Teilbereichen des Detektors liegende gemeinsame Ausleseelektrode vorgesehen ist und dass an die voneinander getrennten Teilbereiche des Detektors jeweils ein elektrisches Feld entgegengesetzter Polarität angelegt ist, wobei die Auslesung der Signale der getrennten Teilbereiche des Detektors über eine gemeinsame Ausleseleitung erfolgt. Wie bereits erwähnt, kann somit durch Bereitstellung der wenigstens zwei voneinander getrennten Teilbereiche eine Erfassung bzw. Auswertung unterschiedlicher Elementarteilchen in einem gemeinsamen Detektor bei entsprechend verringertem Aufwand beispielsweise für Versorgungseinrichtungen erzielt werden. Eine weitere Vereinfachung insbesondere im Hinblick auf den Aufwand für entsprechende Auswerteeinrichtungen wird durch die Bereitstellung der zwischen den Teilbereichen des Detektors liegenden gemeinsamen Ausleseelektrode zur Verfügung gestellt. Zur weiteren Vereinfachung der Unterscheidung bzw. Erfassung unterschiedlicher Elementarteilchen ist erfindungsgemaß darüber hinaus vorgesehen, dass an die voneinander getrennten Teilbereiche des Detektors jeweils ein elektrisches Feld entgegengesetzter Polarität anlegbar ist, wobei die Auslesung der Signale der getrennten Teilbereiche des Detektors über eine gemeinsame Ausleseleitung erfolgt.

Insbesondere zur Vereinfachung der Versorgung, insbesondere Hochspannungsversorgung eines derartigen Detektors wird darüber hinaus vorgeschlagen, dass die Teilbereiche des Detektors an eine gemeinsame Hochspannungsversorgung gekoppelt sind, wie dies einer weiters bevorzugten Ausführungsform der erfindungsgemäßen Vorrichtung entspricht. Während bereits durch Aufnahme unterschiedlicher Teilbereiche in einem gemeinsamen Detektor selbst bei getrennter Versorgung der einzelnen Teilbereiche ein entsprechend verringerter Aufwand für die Versorgung derselben im Vergleich zu voneinander getrennten Detektoren bereitgestellt werden kann, kann durch eine derartige, erfindungsgemäß bevorzugt vorgeschlagene gemeinsame Hochspannungsversorgung der Aufwand hierfür weiter reduziert werden.

Für eine besonders einfache Auswertung und Unterscheidung zwischen unterschiedlichen Elementarteilchen ist darüber hinaus bevorzugt vorgesehen, dass für eine Unterscheidung bzw. Separation zwischen unterschiedlichen Teilchen und/oder Teilchen unterschiedlicher Energie eine Auswerteeinrichtung für einen Vergleich der gemessenen Amplituden von Ladungsimpulsen oder eine Pulsformanalyse der Ladungsimpulse vorgesehen ist.

Gemäß einer weiters bevorzugten Ausführungsform der erfindungsgemäßen Vorrichtung wird darüber hinaus vorgeschlagen, dass eine Konversionsschicht für eine Konversion von Teilchen in in dem Detektor erfassbare Elementarteilchen mit einem Teilbereich des Detektors verbunden bzw. diesem vorgeschaltet ist. Derart gelingt es, durch Konversion bzw. Umwandlung von in der erfindungsgemäßen Vorrichtung bzw. dem aus mehreren Teilbereichen bestehenden Detektor gegebenenfalls nicht unmittelbar erfassbaren bzw. unterscheidbaren Elementarteilchen in in dem Detektor erfassbare Elementarteilchen auch eine Feststellung bzw. Erfassung derselben.

In diesem Zusammenhang wird gemäß einer weiters bevorzugten Ausführungsform vorgeschlagen, dass die Konversionsschicht Bor, Lithium oder Polyethylen für eine Konversion von langsamen Neutronen enthält.

Beispielsweise in Anpassung an unterschiedliche zu erfassende Elementarteilchen und/oder für unterschiedliche Energiebereiche, welche, wie eingangs erwähnt, zu unterschiedlichen Interaktionswahrscheinlichkeiten zwischen den zu erfassenden Teilchen und dem Detektormaterial führen, wird darüber hinaus vorgeschlagen, dass die Teilbereiche des Detektors unterschiedliche Dicken aufweisen, wie dies einer weiters bevorzugten Ausführungsform der erfindungsgemäßen Vorrichtung entspricht.

Ein Verfahren gemäß der vorliegenden Erfindung oder einer bevorzugten Ausführungsform davon sowie eine Vorrichtung gemäß der Erfindung oder einer bevorzugten Ausführungsform davon können hierbei insbesondere zur Erfassung und Unterscheidung zwischen geladenen und nicht-geladenen Elementarteilchen, von Neutronen unterschiedlicher Energie und/oder zwischen geladenen Teilchen und Photonen verwendet werden.

Ein Verfahren gemäß der vorliegenden Erfindung oder einer bevorzugten Ausführungsform davon sowie eine Vorrichtung gemäß der Erfindung oder einer bevorzugten Ausführungsform davon können darüber hinaus bevorzugt zur Erfassung und Unterscheidung von Teilchen in Teilchenbeschleunigern, in Reaktoranlagen, in Diagnoseeinrichtungen, wie beispielsweise Röntgeneinrichtungen, CT-Einrichtungen, in der Medizintechnik und bei nuklearen Technologien, in Sicherheitssystemen, beispielsweise im Strahlenschutz, und für Materialwissenschaften verwendet werden.

Die Erfindung wird nachfolgend anhand von in der beiliegenden Zeichnung schematisch dargestellten Ausführungsbeispielen näher erläutert. In dieser zeigen:

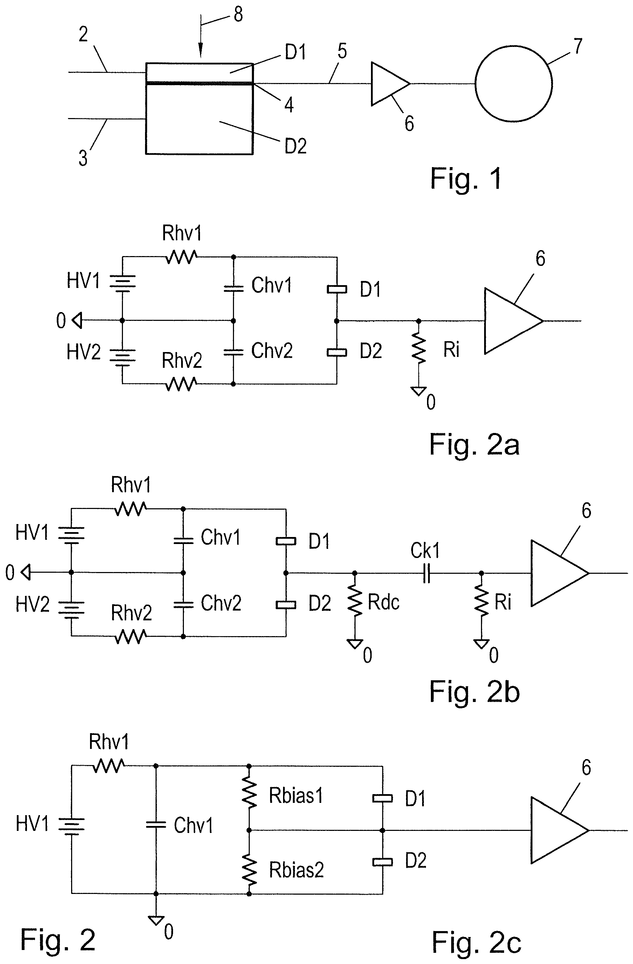

Fig. 1 eine schematische Darstellung einer ersten Ausführungsform einer erfindungsgemäßen Vorrichtung zur Durchführung des erfindungsgemäßen Verfahrens zum Erfassen und zum Unterscheiden von Elementarteilchen;

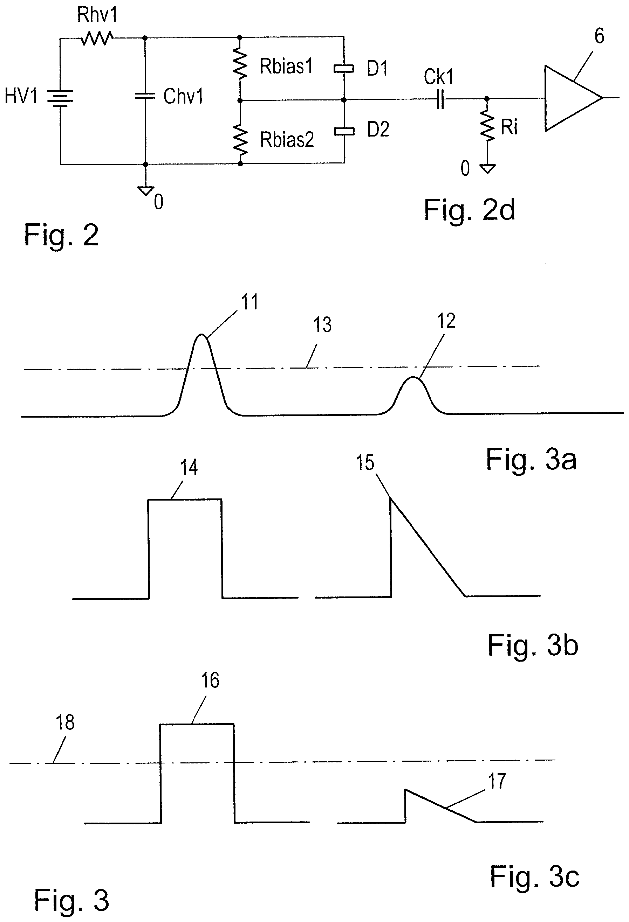

Fig. 2 schematische Schaltbilder zur Versorgung der in Fig. 1 schematisch angedeuteten Vorrichtung, wobei bei der Ausbildung gemäß Fig. 2a eine Versorgung mit zwei Hochspannungen und eine DC-Kopplung vorgesehen sind, bei der Ausbildung gemäß Fig. 2b eine Versorgung ebenfalls mit zwei Hochspannungen und eine AC-Kopplung vorgesehen sind, bei Fig. 2c eine Versorgung mit einer Hochspannung und eine DC-Kopplung vorgesehen sind und bei der Ausbildung gemäß Fig. 2d eine Versorgung mit einer Hochspannung und eine AC-Kopplung vorgesehen sind;
Fig. 3 schematische Darstellungen von Unterscheidungen zwischen unterschiedlichen Elementarteilchen, wobei bei der Darstellung gemäß Fig. 3a eine Unterscheidung zwischen unterschiedlichen Elementarteilchen aufgrund einer unterschiedlichen Amplitude erfolgt, bei der Darstellung gemäß Fig. 3b eine Unterscheidung zwischen unterschiedlichen Teilchen aufgrund der Pulsform vorgesehen ist und bei der Darstellung gemäß Fig. 3c eine Unterscheidung zwischen unterschiedlichen Teilchen sowohl aufgrund der Pulsform als auch der Pulshöhe vorgesehen ist;

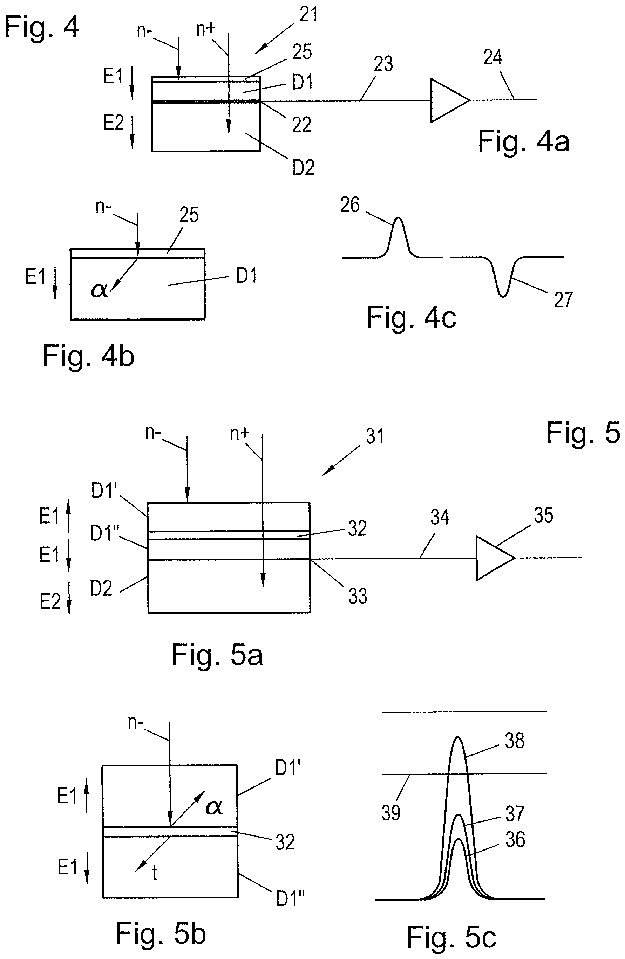

Fig. 4 eine Ausbildung einer erfindungsgemäßen Vorrichtung zur Unterscheidung zwischen schnellen und langsamen Neutronen, wobei Fig. 4a in einer Darstellung ähnlich zu Fig. 1 schematisch den Aufbau dieser Vorrichtung zeigt, Fig. 4b schematisch den Wirkmechanismus einer Umwandlung bzw. Konversion von langsamen Neutronen für eine Feststellung bzw. Erfassung in dem daran anschließenden Detektorbereich darstellt und Fig. 4c ähnlich der Darstellung von Fig. 3a eine Unterscheidung zwischen schnellen und langsamen Neutronen zeigt; und
Fig. 5 eine abgewandelte Ausführungsform einer erfindungsgemäßen Vorrichtung zur Unterscheidung zwischen schnellen und langsamen Neutronen, wobei Fig. 5a ähnlich zu der Darstellung gemäß Fig. 4a eine schematische Darstellung dieser Vorrichtung zeigt, Fig. 5b ähnlich der Darstellung zu Fig. 4b den Wirkmechanismus bei der in Fig. 5a dargestellten Ausführungsform unter Verwendung von Lithium als Konversionsmaterial veranschaulicht und Fig. 5c ein unter Berücksichtigung des in Fig. 5b dargestellten Wirkmechanismus erhältliches Signal zur Erfassung derartiger langsamer Neutronen zeigt.

In Fig. 1 ist schematisch mit 1 ein Detektor bezeichnet, wobei der von einem Diamantdetektor gebildete Detektor in zwei Teilbereiche D1 und D2 unterteilt ist. Die Teilbereiche D1 und D2 des Detektors werden über schematisch mit 2 und 3 angedeutete Versorgungsleitungen mit Hochspannung versorgt, wie dies insbesondere unter Bezugnahme auf Fig. 2 im Detail erörtert werden wird.

Zwischen den Teilbereichen D1 und D2 des Detektors 1 ist eine gemeinsame Ausleseelektrode 4 vorgesehen, von welcher über eine Ausleseleitung 5 ein im Detektor 1 erzeugter Ladungsimpuls abgeleitet wird und unter Zwischenschaltung eines mit 6 angedeuteten Verstärkers nachfolgend einer schematisch mit 7 bezeichneten Auswerteeinrichtung zugeführt wird.

Auf den Detektor 1 bzw. dessen voneinander getrennte Teilbereiche D1 und D2 fallen Elementarteilchen entsprechend dem Pfeil 8 ein, welche, wie dies nachfolgend im Detail erörtert werden wird, im Detektor 1 bzw. dessen Teilbereichen D1 und D2 erfasst und insbesondere in der nachgeschalteten Auswerteeinrichtung 7 voneinander unterschieden werden.

In den Darstellungen gemäß Fig. 2 sind die in Fig. 1 dargestellten voneinander getrennten Teilbereiche des Detektors in den schematischen Schaltbildern wiederum mit D1 und D2 bezeichnet und es ist der Verstärker wiederum mit 6 bezeichnet.

Bei den Ausführungen gemäß Fig. 2a und 2b erfolgt eine Versorgung der Teilbereiche D1 und D2 des Detektors 1 über voneinander getrennte Hochspannungsversorgungen HV1 und HV2, wobei sich die Ausbildungen von Fig. 2a und 2b dadurch unterscheiden, dass bei der Ausbildung gemäß Fig. 2a eine DC-Kopplung vorgesehen ist, während bei der Ausbildung gemäß Fig. 2b eine AC-Kopplung vorgesehen ist.

Im Gegensatz zu den in Fig. 2a und 2b dargestellten Ausführungsformen erfolgt bei den Ausbildungen gemäß Fig. 2c und 2d eine Versorgung der Teilbereiche D1 und D2 des Detektors 1 über eine gemeinsame Hochspannungsversorgung HV1, wobei sich die Ausbildungen gemäß Fig. 2c und 2d ähnlich wie die Ausbildungen gemäß Fig. 2a und 2b wiederum dadurch unterscheiden, dass bei der Ausbildung gemäß Fig. 2c eine DC-Kopplung vorgesehen ist, während bei der Ausbildung gemäß Fig. 2d eine AC-Kopplung vorgesehen ist.

Es lässt sich somit bei den Ausbildungen gemäß Fig. 2c und 2d der Aufwand für eine Versorgung des Detektors 1 durch Bereitstellung lediglich einer Hochspannungsversorgung HV1 bei entsprechend gewählter Beschaltung gegenüber den Ausbildungen gemäß Fig. 2a und 2b entsprechend reduzieren, wobei eine derartige Vereinfachung der Versorgung bzw. Anspeisung des Detektors insbesondere bei entsprechend langen Zuleitungen, wie sie bei unterschiedlichen Einsatzzwecken unumgänglich sind, besonders vorteilhaft ist.

Bei den weiters in Fig. 2 dargestellten Elementen bezeichnen Rhv1 und Rhv2 jeweils Ladewiderstände und Chv1 und Chv2 Stützkondensatoren. Weiters wird durch Ri der Innenwiderstand des Verstärkers 6 bezeichnet. Rbias 1 und Rbias 2 bezeichnen Spannungsteiler und Ck1 bezeichnet einen AC-Koppelkondensator.

Wie dies aus den nachfolgenden Erörterungen ersichtlich werden wird, gelingt durch die Teilung bzw. Trennung des Detektors 1 in wenigstens zwei voneinander getrennte Teilbereiche D1 und D2 eine Erfassung unterschiedlicher Elementarteilchen sowie eine Unterscheidung zwischen denselben, wobei die Teilbereiche D1 und D2 entsprechend getrennt versorgt werden und eine Auslesung über eine gemeinsame, zwischen den Teilbereichen D1 und D2 angeordnete Ausleseelektrode 4 vorgenommen wird.

Bei Verwendung von Diamantdetektoren für den Detektor 1 bzw. dessen Teilbereiche D1 und D2 ist die Wechselwirkung bzw. Interaktionswahrscheinlichkeit des Detektormaterials, insbesondere bei Verwendung von monokristallinem Material, für die Detektoren D1 und D2 bekannt. Derart ist insbesondere bekannt, dass eine Interaktionswahrscheinlichkeit zwischen dem Detektormaterial und geladenen Teilchen, wie beispielsweise Elektronen, Protonen, Alpha-Teilchen, Tritonen und anderen Ionen im Wesentlichen gleich 1 ist. Demgegenüber ist eine Interaktionswahrscheinlichkeit des Detektormaterials mit elektrisch nicht geladenen Teilchen, wie beispielsweise Photonen und Neutronen kleiner bzw. wesentlich kleiner als eins, so dass diese das Detektormaterial gegebenenfalls ohne Wechselwirkung durchdringen. Weiters ist bei Verwendung von Diamantmaterial für den Detektor 1 bekannt, dass ein Ausmaß einer Energiedeposition bzw. -ablagerung innerhalb des Detektormaterials beim Durchtritt eines Teilchens durch diesen abhängig von der Energie eines derartigen Teilchens ist.

In Kenntnis dieser Wechselwirkungsmechanismen sowie unter entsprechender Beschaltung bzw. Versorgung der voneinander getrennten Teilbereiche D1 und D2 des Detektors 1 sowie unter Bereitstellung von beispielsweise unterschiedlichen Dicken der Teilbereiche D1 und D2 des Detektormaterials, wie dies in Fig. 1 schematisch angedeutet ist, sowie unter Verwendung der zwischen den Teilbereichen D1 und D2 des Detektors 1 angeordneten gemeinsamen Ausleseelektrode 4 lassen sich somit unterschiedliche Elementarteilchen und/oder Teilchen unterschiedlicher Energie erfassen und bei einem gemeinsamen Auftreffen derartiger unterschiedlicher Elementarteilchen auf den Detektor 1 bzw. dessen Teilbereiche D1 und D2 auch voneinander unterscheiden.

Weiters ist bekannt, dass bei einer Absorption eines Teilchens innerhalb des Detektormaterials und derart einer Absorption der gesamten Energie eines derartigen Teilchens bei einer Pulsformanalyse eines Ladungsimpulses ein im Wesentlichen rechteckiger Puls nachweisbar ist, während bei Teilchen, welche das Detektormaterial durchdringen und derart lediglich ein Teil der Teilchenenergie absorbiert wird, bei einer derartigen Pulsformanalyse ein im Wesentlicher dreieckiges Profil eines Ladungsimpulses feststellbar ist. Derart werden weitere Möglichkeiten einer Unterscheidung zwischen unterschiedlichen, in einem Detektor 1 bzw. dessen Teilbereiche D1 und D2 feststellbaren Elementarteilchen zur Verfügung gestellt.

Diese im Wesentlichen rechteckigen bzw. dreieckigen Pulsformen stellen genau genommen idealisierte bzw. Grenzfälle dar, bei welchen eine Absorption der gesamten Energie eines derartigen Teilchens im Wesentlichen an einer eng begrenzten Stelle erfolgt oder ein derartiges Teilchen das Detektormaterial im Wesentlichen gleichmäßig durchdringt. Neben diesen idealisierten bzw. Grenzfällen sind auch Mischformen denkbar, bei welchen beispielsweise ein Teilchen seine gesamte Energie in einem vergleichsweise eng begrenzten Raum im Detektormaterial abgibt oder ein Teilchen das Detektormaterial ungleichmäßig durchdringt. Auch derartige Fälle, welche beispielsweise zu trapezförmigen Pulsformen als einer Mischung aus einem Rechteckpuls und einem daran anschließenden bzw. diesem vorangehenden dreieckigen Puls führen können oder im Wesentlichen rechteckige Pulsformen unterschiedlicher Niveaus ausbilden können, sind vorstellbar. Diese sind beispielsweise ebenfalls durch eine Pulsformanalyse auflösbar.

Derart ist bei der schematischen Darstellung gemäß Fig. 3a gezeigt, dass bei einer vollständigen Absorption beispielsweise eines Alpha-Teilchens zur vollständigen Energieabgabe innerhalb des Detektors ein Puls 11 entsprechend großer Amplitude feststellbar ist, während für ein hochenergetisches, beispielsweise geladenes Teilchen, welches das Detektormaterial durchdringt, lediglich eine geringe Energieabgabe erfolgt, wobei dies in einem Puls 12 geringer Amplitude resultiert. Durch Vorsehen eines Schwellwerts 13 kann somit in einfacher und zuverlässiger Weise beispielsweise zwischen einem im Detektor bzw. einem der Detektorbereiche D1 bzw. D2 absorbierten und erfassten Alpha-Teilchen entsprechend der Pulsform bzw. dem Puls 11 hoher Amplitude und einem durchtretenden hochenergetischen, insbesondere geladenen Teilchen mit der Pulsform 12 unterschieden werden.

Neben einer einfachen Unterscheidung auf Basis der Pulshöhe bzw. Amplitude, wie dies in Fig. 3a gezeigt ist, kann eine Unterscheidung zwischen im Detektormaterial vollständig absorbierten Teilchen und durch das Material hindurchtretenden Teilchen beispielsweise auch durch eine Pulsformanalyse vorgenommen werden, wie dies in Fig. 3b und 3c gezeigt ist.

Bei der Darstellung gemäß Fig. 3b ist eine Unterscheidung zwischen Alpha-Teilchen gemäß dem im Wesentlichen rechteckigen Puls 14 und Gamma-Teilchen entsprechend einem im Wesentlichen dreieckigen Impuls 15 angedeutet, wobei bei der Darstellung bzw. Auswertung gemäß Fig. 3b die Teilchen im Wesentlichen gleiche Energie aufweisen.

Demgegenüber ist ähnlich wie bei der Darstellung gemäß Fig. 3a in Fig. 3c eine Unterscheidung bzw. Trennung zwischen einem Alpha-Teilchen entsprechend der Pulsform 16, welche wiederum im Wesentlichen rechteckig ist, und einem hochenergetischen und das Detektormaterial durchdringenden Teilchen entsprechend der Pulsform 17 durch Pulsformanalyse angedeutet. Aus dem Vergleich der Pulsformen gemäß Fig. 3c ist nicht nur ersichtlich, dass eine Unterscheidung zwischen diesen Teilchen auf Basis der unterschiedlichen Pulsform sondern auch auf Basis der unterschiedlichen maximalen Höhe des Pulses ähnlich wie bei der Darstellung gemäß Fig. 3a beispielsweise durch zusätzliches Vorsehen eines Schwellwerts erzielbar ist, wie dies strichliert durch 18 angedeutet ist.

Wie aus den vorangehenden Ausführungen ersichtlich, wird es somit durch Unterteilung eines derartigen Detektors in voneinander getrennte Teilbereiche D1 und D2 sowie ein Vorsehen einer zwischen den Teilbereichen D1 und D2 angeordneten Ausleseelektrode 4 möglich, zwischen unterschiedlichen Elementarteilchen, insbesondere zwischen geladenen und nicht geladenen Teilchen als auch zwischen Teilchen unterschiedlicher Energie zu unterscheiden.

Ein derartiger Detektor mit voneinander getrennten Teilchenbreichen kann jedoch auch zur Unterscheidung einer einzigen Teilchenart bei Teilchen unterschiedlicher Energie herangezogen werden, wie dies gemäß den Ausführungsformen entsprechend Fig. 4 und 5 erörtert werden wird.

In Fig. 4a ist ähnlich der Darstellung gemäß Fig. 1 ein Detektor 21 wiederum aus voneinander getrennten Teilbereichen D1 und D2 gebildet, zwischen welchen eine gemeinsame Ausleseelektrode 22 vorgesehen ist, welche über eine Ausleseleitung 23 mit einem Verstärker 24 und einer nicht näher dargestellten Auswerteeinrichtung gekoppelt ist.

Über Ausführungsformen, wie sie beispielsweise in Fig. 2 angedeutet sind, erfolgt eine Versorgung der einzelnen Teilbereiche D1 und D2 des Detektors, wobei Felder E1 und E2 für die Teilbereiche D1 und D2 in Fig. 4a angedeutet sind.

Mit einer Ausbildung gemäß Fig. 4 soll eine Unterscheidung zwischen Neutronen hoher und niedriger Energie vorgenommen werden, wobei ein Neutronenstrahl niedriger Energie mit n- in Fig. 4a angedeutet ist, während ein Neutronenstrahl hoher Energie mit n+ angedeutet ist. Es wird ausdrücklich festgehalten, dass die Zusätze + und - sich auf ein Energieniveau der Neutronen beziehen und keinerlei Hinweise auf eine Ladung darstellen sollen.

Während Neutronen hoher Energie n+ in einem derartigen Detektor unmittelbar detektiert werden können, ist für eine Detektion langsamer Neutronen n- eine Umwandlung derselben in Teilchen erforderlich, welche in dem Detektor 21 bzw. einem Teilbereich D1 bzw. D2 davon feststellbar bzw. erfassbar sind. Derart ist bei der Ausbildung gemäß Fig. 4 dem Teilbereich D1 des Detektors eine Umwandlungs- bzw. Konversionsschicht 25 vorgeschaltet, wobei diese Konversionsschicht Bor enthält und bei einem Auftreffen langsamer Neutronen auf diese Umwandlungs- bzw. Konversionsschicht 25 eine Umwandlung in Alpha-Teilchen erfolgt, wobei ein derartiges Alpha-Teilchen nachfolgend im Detektor D1 erfassbar ist.

Gleichzeitig sind Neutronen hoher Energie n+ im Detektor D2 bei entsprechender Bemessung und insbesondere größerer Dicke desselben gegenüber dem Detektor D1 feststellbar. Durch die in Fig. 4a angedeutete Orientierung der Felder E1 und E2 in den einzelnen Detektorbereichen D1 und D2 und unter Bezugnahme auf die zwischen den Detektorbereichen D1 und D2 vorgesehene gemeinsame Ausleseelektrode 22 lässt sich das in Fig. 4c dargestellte Ergebnis erzielen, wobei der positive Puls 26 auf das Neutron niedriger Energie n- bzw. das daraus resultierende Alpha-Teilchen zurückgeht, während der negative Puls 27 auf das im Detektorbereich D2 detektierte Neutron hoher Energie n+ zurückgeht.

Es lässt sich somit in einem gemeinsamen Detektor 21 und unter Vorsehen einer Ausleseelektrode 22 eine Unterscheidung zwischen Neutronen niedriger Energie n- und Neutronen hoher Energie n+ vornehmen. Eine derartige Unterscheidung zwischen Neutronen unterschiedlicher Energie kann beispielsweise in Reaktorinstrumentierungen oder bei einer Untersuchung von Materialien eingesetzt werden. Ein derartiger Detektor kann hierbei Detektoren ersetzen, bei welchen bisher Helium-3 zum Einsatz gelangte, welches für viele Anwendungsfälle nicht bzw. nicht mehr verfügbar ist.

Eine derartige Unterscheidung kann beispielsweise wiederum über die Polarität sowie eine Pulsformanalyse vorgenommen werden, wie dies beispielsweise im Zusammenhang mit Fig. 4c erörtert wurde.

Eine derartige Unterscheidung zwischen Neutronen unterschiedlicher Energie kann beispielsweise auch im Zusammenhang mit Materialwissenschaften, beispielsweise bei einer Exploration von Erdöl und Erdgas, oder im Zusammenhang mit nuklearen Technologien, speziell betreffend die Fusionsforschung eingesetzt werden. Derartige Detektoren, welche einen Ersatz für Detektoren unter Verwendung von Helium-3 darstellen, sind beispielsweise auch insbesondere in der Neutronendiagnostik einsetzbar.

In Fig. 5 ist ähnlich wie bei der Ausbildung gemäß Fig. 4 eine abgewandelte Ausführungsform zur Unterscheidung zwischen Neutronen niedriger Energie und Neutronen hoher Energie angedeutet.

Der Detektor 31 besteht in dieser Ausführungsform aus zwei dünnen Teilbereichen D1' und D1", zwischen welchen eine Umwandlungs- bzw. Konversionsschicht 32 vorgesehen ist, und einem dickeren Teilbereich D2, wobei zwischen dem Teilbereich D1" und dem Teilbereich D2 wiederum eine gemeinsame Ausleseelektrode 33 vorgesehen ist, welche über eine Ausleseleitung 34 mit einem Verstärker 35 gekoppelt ist.

Aus der Darstellung gemäß Fig. 5a ist darüber hinaus ersichtlich, dass aneinander anschließende Teilbereiche D1' und D1" entgegengesetzte Polarität aufweisen.

In Fig. 5b ist ähnlich wie bei der Darstellung gemäß Fig. 4b der Wirkmechanismus der in Fig. 5 dargestellten Ausführungsform angedeutet, wobei anstelle von Bor in der Umwandlungs- bzw. Konversionsschicht 32 Lithium enthalten ist. Bei einem Auftreffen von Neutronen niedriger Energie auf die Umwandlungs- bzw. Konversionsschicht 32 findet eine Umwandlung eines derartigen Neutrons niedriger Energie n- in ein Alpha-Teilchen α und Triton t statt, wobei bei dieser Umwandlung bekannt ist, dass sich das Alpha-Teilchen und Triton in entgegengesetzten Richtungen bewegen und geringfügig unterschiedliche Energie aufweisen.

Aufgrund der Wechselwirkungsmechanismen von Alpha-Teilchen und Triton mit dem Detektormaterial lässt sich bei einer Überprüfung einer Koinzidenz zwischen derartigen Signalen unmittelbar ein langsames Neutron durch eine Summierung derartiger Signale erfassen, wie dies in Fig. 5c angedeutet ist. In Fig. 5c ist gezeigt, dass das durch das Alpha-Teilchen erzeugte Signal 36 die geringste Höhe aufweist, und dass sich durch Summieren dieses durch das Alpha-Teilchen erzeugten Signals 36 mit dem Signal 37 des Triton ein markantes Summensignal 38 bilden lässt, wobei durch Festlegung einer entsprechenden Schwelle 39 für eine Auswertung sich somit zuverlässig Neutronen geringer Energie n- in einem derartigen Detektor nachweisen lassen.
Ein Nachweis bzw. eine Erfassung von Neutronen hoher Energie n+ erfolgt ähnlich wie bei der Ausführungsform gemäß Fig. 4.

Während sich durch eine Verwendung einer Konversionsschicht, welche Bor enthält, wie dies in Fig. 4 angedeutet ist, höhere Zählraten als bei einer Verwendung von Lithium erzielen lassen, sind bei einer derartigen Ausbildung insgesamt niedrigere Signale erhältlich, während bei einer Verwendung einer Umwandlungs- bzw. Konversionsschicht 32, welche Lithium enthält, bei niedrigerer Zählrate höhere Signale zu erhalten sind.

Darüber hinaus lässt sich bei einer Verwendung von Bor in einer Konversionsschicht in einer Anordnung ähnlich der Darstellung von Fig. 5 im Rahmen einer sogenannten Sandwich-Konstruktion eine entsprechend höhere Zählrate durch Bereitstellung eines 4π-Detektors erzielen.

## Patentansprüche

1. Verfahren zum Erfassen und zum Unterscheiden von Elementarteilchen, wie beispielsweise Protonen, Ionen, Elektronen, Neutronen, Photonen oder dgl., in einem Diamantdetektor (1, 21, 31), wobei an den Detektor (1, 21, 31) ein elektrisches Feld angelegt wird und wobei beim Durchtritt eines Teilchens durch den Detektor (1, 21, 31) ein Ladungsimpuls in dem Detektor (1, 21, 31) erzeugt wird und jeder Ladungsimpuls nachfolgend in ein elektrisches Signal umgewandelt wird, wobei der Detektor (1, 21, 31) in wenigstens zwei voneinander getrennte Teilbereiche (D1, D1', D1", D2) unterteilt wird, an welche jeweils getrennt ein elektrisches Feld angelegt wird, **dadurch gekennzeichnet, dass** eine Auslesung jedes Ladungsimpulses über eine zwischen den Teilbereichen (D1, D1 , D1", D2) liegende gemeinsame Ausleseelektrode (4, 22, 33) des Detektors (1, 21, 31) durchgeführt wird und dass an die voneinander getrennten Teilbereiche (D1, D1', D1", D2) des Detektors (1, 21, 31) jeweils ein elektrisches Feld entgegengesetzter Polarität angelegt wird, wobei die Auslesung der Signale der getrennten Teilbereiche (D1, D1', D1", D2) des Detektors (1, 21, 31) über eine gemeinsame Ausleseleitung (23, 34) erfolgt.

2. Verfahren nach Anspruch 1, **dadurch gekennzeichnet, dass** eine Unterscheidung bzw. Separation zwischen unterschiedlichen Teilchen und/oder Teilchen unterschiedlicher Energie durch einen Vergleich der gemessenen Amplituden von Ladungsimpulsen oder eine Pulsformanalyse der Ladungsimpulse durchgeführt wird.

3. Verfahren nach Anspruch 2, **dadurch gekennzeichnet, dass** zum Unterscheiden von Teilchen unterschiedlicher Amplitude eine Pulsform- oder Schwellwerttriggerung durchgeführt wird.

4. Verfahren nach Anspruch 2, **dadurch gekennzeichnet, dass** bei einer Pulsformanalyse insbesondere zwischen im Wesentlichen rechteckigen Pulsformen, welche insbesondere von Teilchen erzeugt werden, welche den Detektor nicht durchdringen, und im Wesentlichen dreieckigen Pulsformen unterschieden wird, welche insbesondere von den Detektor durchdringenden Teilchen erzeugt werden.

5. Verfahren nach einem der Ansprüche 1 bis 4, **dadurch gekennzeichnet, dass** für eine Erfassung von in dem Detektor (21, 31) nicht unmittelbar erfassbaren Elementarteilchen eine Konversion der Teilchen in einer mit einem Teilbereich (D1, D1', D1") des Detektors (21, 31) verbundenen bzw. diesem vorgeschalteten Konversionsschicht (25, 32) in in dem Detektor (21, 31) erfassbare Elementarteilchen durchgeführt wird.

6. Vorrichtung zum Erfassen und zum Unterscheiden von Elementarteilchen, wie beispielsweise Protonen, Ionen, Elektronen, Neutronen, Photonen oder dgl., mit einem Diamantdetektor (1, 21, 31) zum Erzeugen eines Ladungsimpulses in dem Detektor (1, 21, 31) bei Durchtritt eines Teilchens durch diesen, wobei an den Detektor (1, 21, 31) ein elektrisches Feld angelegt ist, wobei der Detektor (1, 21, 31) in wenigstens zwei voneinander getrennte Teilbereiche (D1, D1', D1", D2) unterteilt ist, an welche jeweils getrennt ein elektrisches Feld anlegbar ist, **dadurch gekennzeichnet, dass** für eine Auslesung jedes Ladungsimpulses eine zwischen den Teilbereichen (D1, D1', D1", D2) des Detektors (1, 21, 31) liegende gemeinsame Ausleseelektrode (4, 22, 33) vorgesehen ist und dass an die voneinander getrennten Teilbereiche (D1, D1', D1", D2) des Detektors (1, 21, 31) jeweils ein elektrisches Feld entgegengesetzter Polarität angelegt ist, wobei die Auslesung der Signale der getrennten Teilbereiche (D1, D1', D1", D2) des Detektors (1, 21, 31) über eine gemeinsame Ausleseleitung (23, 34) erfolgt.

7. Vorrichtung nach Anspruch 6, **dadurch gekennzeichnet, dass** die Teilbereiche (D1, D1', D1", D2) des Detektors (1, 21, 31) an eine gemeinsame Hochspannungsversorgung gekoppelt sind.

8. Vorrichtung nach Anspruch 6 oder 7, **dadurch gekennzeichnet, dass** für eine Unterscheidung bzw. Separation zwischen unterschiedlichen Teilchen und/oder Teilchen unterschiedlicher Energie eine Auswerteeinrichtung (7) für einen Vergleich der gemessenen Amplituden von Ladungsimpulsen oder eine Pulsformanalyse der Ladungsimpulse vorgesehen ist.

9. Vorrichtung nach einem der Ansprüche 6 bis 8, **dadurch gekennzeichnet, dass** eine Konversionsschicht (25, 32) für eine Konversion von Teilchen in in dem Detektor (21, 31) erfassbare Elementarteilchen mit einem Teilbereich (D1, D1', D1") des Detektors (21, 31) verbunden bzw. diesem vorgeschaltet ist.

10. Vorrichtung nach Anspruch 9, **dadurch gekennzeichnet, dass** die Konversionsschicht (25, 32) Bor, Lithium oder Polyethylen für eine Konversion von langsamen Neutronen enthält.

11. Vorrichtung nach einem der Ansprüche 6 bis 10, **dadurch gekennzeichnet, dass** die Teilbereiche (D1, D1', D1", D2) des Detektors (1, 21, 31) unterschiedliche Dicken aufweisen.

12. Verwendung einer Vorrichtung nach einem der Ansprüche 6 bis 11 zur Erfassung und Unterscheidung zwischen geladenen und nicht-geladenen Elementarteilchen, von Neutronen unterschiedlicher Energie und/oder zwischen geladenen Teilchen und Photonen.

13. Verwendung einer Vorrichtung nach einem der Ansprüche 6 bis 11 zur Erfassung und Unterscheidung von Teilchen in Teilchenbeschleunigern, in Reaktoranlagen, in Diagnoseeinrichtungen, wie beispielsweise Röntgeneinrichtungen, CT-Einrichtungen, in der Medizintechnik und bei nuklearen Technologien, in Sicherheitssystemen, beispielsweise im Strahlenschutz, und für Materialwissenschaften.

## Claims

1. A method for detecting and discriminating elementary particles such as protons, ions, electrons, neutrons, photons or the like, for example, in a diamond detector (1, 21, 31), wherein an electric field is applied to the detector (1, 21, 31) and wherein a charge pulse is generated in the detector (1, 21, 31) when a particle passes through the detector (1, 21, 31) and each charge pulse is subsequently converted into an electrical signal, wherein the detector (1, 21, 31) is divided into at least two partial regions (D1, D1', D1", D2) which are separate from one another, to which an electric field is applied separately in each case, **characterized in that** a read-out of each charge pulse is performed by means of a common read-out electrode (4, 22, 33) of the detector (1, 21, 31) located between the partial regions (D1, D1', D1", D2) of the detector (1, 21, 31) and that an electric field of reverse polarity is applied to each of the partial regions (D1, D1', D1", D2) of the detector (1, 21, 31) separated from one another, wherein the read-out of the signals of the separate partial regions (D1, D1', D1", D2) of the detector (1, 21, 31) takes place by means of a common read-out line (23, 34).

2. The method according to claim 1, **characterized in that** a discrimination or separation is carried out between different particles and/or particles with different energy by means of a comparison of the measured amplitudes of charge pulses or a pulse shape analysis of the charge pulses.

3. The method according to claim 2, **characterized in that** in order to discriminate particles of different amplitude, pulse shape or threshold value triggering is carried out.

4. The method according to claim 2, **characterized in that** during a pulse shape analysis, a discrimination is in particular made between substantially rectangular pulse shapes, which are in particular generated by particles that do not penetrate the detector, and substantially triangular pulse shapes, which are particularly generated by particles penetrating the detector.

5. The method according to one of claims 1 to 4, **characterized in that** the detection of elementary particles which are not immediately detectable in the detector (21, 31) requires a conversion of the particles in a conversion layer (25, 32) connected to, or preceding, a partial region (D1, D1', D1") of the detector (21, 31) into elementary particles that are detectable in the detector (21, 31).

6. A device for detecting and discriminating elementary particles, such as protons, ions, electrons, neutrons, photons or the like, for example, using a diamond detector (1, 21, 31) for generating a charge pulse in the detector (1, 21, 31) when a particle passes through said detector, wherein an electric field is applied to the detector (1, 21, 31), wherein the detector (1, 21, 31) is divided into at least two partial regions (D1, D1', D1", D2) which are separate from one another, to each of which an electric field can be separately applied, **characterized in that** for a read-out of each charge pulse, a common read-out electrode (4, 22, 33) is provided between the partial regions (D1, D1', D1", D2) of the detector (1, 21, 31) and that an electric field of reverse polarity is applied to each of the partial regions (D1, D1', D1", D2) of the detector (1, 21, 31) separated from one another, wherein the read-out of the signals of the separate partial regions (D1, D1', D1", D2) of the detector (1, 21, 31) takes place by means of a common read-out circuit (23, 34).

7. The device according to claim 6, **characterized in that** the partial regions (D1, D1', D1", D2) of the detector (1, 21, 31) are connected to a common high-voltage supply.

8. The device according to claim 6 or 7, **characterized in that** in order to discriminate between, or separate, different particles and/or particles of different energy, an evaluating device (7) is provided for comparing the measured amplitudes of charge pulses or a pulse shape analysis of the charge pulses.

9. The device according to one of claims 6 to 8, **characterized in that** a conversion layer (25, 32) for the conversion of particles into elementary particles that can be detected in the detector (21, 31) is connected to, or precedes, a partial region (D1, D1', D1") of the detector (21, 31).

10. The device according to claim 9, **characterized in that** the conversion layer (25, 32) contains boron, lithium or polyethylene for the conversion of slow neutrons.

11. The device according to one of claims 6 to 10, **characterized in that** the partial regions (D1, D1', D1", D2) of the detector (1, 21, 31) exhibit different thicknesses.

12. Use of a device according to one of claims 6 to 11 for detecting and discriminating between charged and non-charged elementary particles, neutrons of different energy and/or between charged particles and photons.

13. Use of a device according to one of claims 6 to 11 for detecting and discriminating between particles in particle accelerators, reactor plants, diagnostic equipment such as X-ray units, CT units, for example, in medical technology and, in the case of nuclear technology, in security systems, for example in radiation protection, and for material sciences.

## Revendications

1. Procédé de détection et de différenciation de particules élémentaires telles que des protons, des ions, des électrons, des neutrons, des photons ou analogues dans un détecteur à diamant (1, 21, 31), dans lequel un champ électrique est appliqué au détecteur (1, 21, 31) et dans lequel une particule, lorsqu'elle passe à travers le détecteur (1, 21, 31), génère une impulsion de charge dans le détecteur (1, 21, 31) et chaque impulsion de charge est ensuite convertie en un signal électrique, le détecteur (1, 21, 31) étant subdivisé en au moins deux zones partielles (D1, D1', D1", D2) qui sont séparées l'une de l'autre et auxquelles un champ électrique est appliqué séparément, **caractérisé en ce que** une lecture de chaque impulsion de charge est effectuée par l'intermédiaire d'une électrode de lecture commune (4, 22, 33) du détecteur (1, 21, 31) située entre les zones partielles (D1, D1', D1", D2), et **en ce qu'**un champ électrique de polarité opposée est appliqué aux zones partielles (D1, D1', D1", D2) du détecteur (1, 21, 31) séparées l'une de l'autre, la lecture des signaux des zones partielles séparées (D1, D1', D1", D2) du détecteur (1, 21, 31) s'effectuant par l'intermédiaire d'une ligne de lecture commune (23, 34).

2. Procédé selon la revendication 1, **caractérisé en ce qu'**une différenciation ou une séparation entre différentes particules et/ou entre des particules d'énergie différente est effectuée par une comparaison des amplitudes mesurées des impulsions de charge ou par une analyse de la forme des impulsions de charge.

3. Procédé selon la revendication 2, **caractérisé en ce qu'**un déclenchement par forme d'impulsion ou par valeur seuil est effectué pour distinguer les particules d'amplitudes différentes.

4. Procédé selon la revendication 2, **caractérisé en ce qu'**une analyse de la forme des impulsions distingue notamment les formes d'impulsions sensiblement rectangulaires, qui sont produites en particulier par des particules qui ne pénètrent pas le détecteur, et les formes d'impulsions sensiblement triangulaires, qui sont produites en particulier par des particules qui pénètrent le détecteur.

5. Procédé selon l'une des revendications 1 à 4, **caractérisé en ce que**, pour la détection de particules élémentaires non directement détectables dans le détecteur (21, 31), il est effectué une conversion des particules dans une couche de conversion (25, 32), qui est reliée à une zone partielle (D1, D1', D1") du détecteur (21, 31) ou qui est montée en amont de celle-ci, en des particules élémentaires détectables dans le détecteur (21, 31).

6. Dispositif de détection et de différenciation de particules élémentaires, telles que des protons, des ions, des électrons, des neutrons, des photons ou analogues, comprenant un détecteur à diamant (1, 21, 31) pour générer une impulsion de charge dans ledit détecteur (1, 21, 31) lorsqu'une particule passe à travers lui, un champ électrique étant appliqué audit détecteur (1, 21, 31), ledit détecteur (1, 21, 31) étant subdivisé en au moins deux zones partielles (D1, D1', D1", D2) séparées l'une de l'autre et auxquelles un champ électrique peut être appliqué séparément, **caractérisé en ce que**, pour une lecture de chaque impulsion de charge, il est prévu une électrode de lecture (4, 22, 33) commune entre les zones partielles (D1, D1', D1", D2) du détecteur (1, 21, 31) et **en ce qu'**un champ électrique de polarité opposée est appliqué aux zones partielles (D1, D1', D1", D2) du détecteur (1, 21, 31) séparées l'une de l'autre, la lecture des signaux des zones partielles séparées (D1, D1', D1", D2) du détecteur (1, 21, 31) s'effectuant par l'intermédiaire d'une ligne de lecture commune (23, 34).

7. Dispositif selon la revendication 6, **caractérisé en ce que** les zones partielles (D1, D1', D1", D2) du détecteur (1, 21, 31) sont reliées à une alimentation commune à haute tension.

8. Dispositif selon la revendication 6 ou la revendication 7, **caractérisé en ce que**, pour une différenciation ou une séparation entre des particules différentes et/ou des particules d'énergie différente, il est prévu un dispositif d'évaluation (7) servant à comparer les amplitudes mesurées des impulsions de charge ou à effectuer une analyse de la forme des impulsions de charge.

9. Dispositif selon l'une des revendications 6 à 8, **caractérisé en ce qu'**une couche de conversion (25, 32) pour une conversion de particules en des particules élémentaires détectables dans le détecteur (21, 31) est reliée à une zone partielle (D1, D1', D1") du détecteur (21, 31) ou est montée en amont de celle-ci.

10. Dispositif selon la revendication 9, **caractérisé en ce que** la couche de conversion (25, 32) contient du bore, du lithium ou du polyéthylène pour une conversion de neutrons lents.

11. Dispositif selon l'une quelconque des revendications 6 à 10, **caractérisé en ce que** les zones partielles (D1, D1', D1", D2) du détecteur (1, 21, 31) ont des épaisseurs différentes.

12. Utilisation d'un dispositif selon l'une des revendications 6 à 11 pour la détection et la différenciation entre des particules élémentaires chargées et non chargées, des neutrons d'énergies différentes et/ou entre des particules chargées et des photons.

13. Utilisation d'un dispositif selon l'une des revendications 6 à 11 pour la détection et la différenciation de particules dans des accélérateurs de particules, dans des installations de réacteurs, dans des équipements de diagnostic, tels que par exemple des équipements à rayons X, des installations de tomodensitométrie, en matière de technologie médicale et de technologies nucléaires, dans des systèmes de sécurité, par exemple en matière de radioprotection, et pour les sciences des matériaux.
